# EUROPEAN PATENT SPECIFICATION

(11) **EP 4 484 279 B1**
(45) Date of publication and mention of the grant of the patent: **07.10.2026**
(21) Application number: 23182702.3
(22) Date of filing: 30.06.2023
(51) Int. Cl.: B64C 9/02, B64C 9/18

(54) **TRAILING EDGE SYSTEM FOR AN AIRCRAFT AND METHOD FOR OPERATING A TRAILING EDGE MOVABLE OF A TRAILING EDGE SYSTEM**
HINTERKANTENSYSTEM FÜR EIN FLUGZEUG UND VERFAHREN ZUM BETREIBEN EINER VON EINEM HINTERKANTENSYSTEM BEWEGBAREN AUSTRITTSKANTE
SYSTÈME DE BORD DE FUITE POUR UN AÉRONEF ET PROCÉDÉ DE FONCTIONNEMENT D'UN BORD DE FUITE MOBILE D'UN SYSTÈME DE BORD DE FUITE

(43) Date of publication of application: 01.01.2025
(73) Proprietor: Airbus Operations GmbH, 21129 Hamburg (DE); Airbus Operations (S.A.S.), 31060 Toulouse Cedex 9 (FR)
(72) Inventor: LORENZ, Florian, 21129 Hamburg (DE); ANDREANI, Luc, 21129 Hamburg (DE); BLANC, Sébastien, 31060 Toulouse Cedex 9 (FR)
(74) Representative: LKGLOBAL Partnerschaftsgesellschaft mbB

(56) References cited:
- US-A- 2 352 062
- US-A- 2 666 603
- US-A1- 2017 088 250
- US-B2- 11 046 421
- US-B2- 7 815 147

## Description

### Field of the invention

The invention generally relates to movable flap systems. In particular, the invention relates to a trailing edge system for an aircraft and a method for operating a trailing edge movable of a trailing edge system.

### Technical Background

Movables like flap components for aircraft are usually exposed to strong aerodynamic loads during operation of the aircraft. For example, flap components are attached at a trailing edge region of an aircraft wing and provide specified cruise and high-lift configurations, wherein the flap components are adapted to be retracted and deployed depending on the current flight condition. Modern high-lift trailing edge systems use flap components which rotate and perform a fowler motion to set up the specified high-lift wing configurations. One important aerodynamic parameter is the gap between the flap surface and the wing surface, i.e., the so-called shroud line, since this gap considerably affects the airflow in the trailing edge regions. In order to design the gap for the different settings, either the movement of the flap component in relation to the shroud can be tailored or the shroud can be mechanically adapted.

US 2012/0012696 A1 describes an aircraft flap actuator assembly which includes at least one fixed support, at least one track having a curvilinear track surface connected to the fixed support, at least one flap support adapted to traverse the curvilinear track surface, a trailing edge flap connected to the at least one flap support and a flap actuator engaging the at least one flap support.

US 6,076,775 A describes a lifting airfoil such as an aircraft wing with a landing flap that forms at least a portion of a trailing edge of the airfoil and that is movably connected to the main body of the airfoil, wherein the landing flap has a flap leading edge nose and a flap trailing edge body and is bounded by a pressure-side cover skin and a vacuum-side cover skin.

US 11 046 421 B2 describes an apparatus comprising an aircraft wing, a control surface hingedly connected to a trailing edge of the aircraft wing, wherein a slot is provided between the aircraft wing and the control surface. A seal is disposed over the slot, wherein the seal is hingedly connected to the aircraft wing.

US 2 352 062 A describes an airfoil to which a flap is attached at a hinge. The airfoil comprises an upper lip with a trailing edge. At this trailing edge of the upper lip, the flap makes tight contact with the airfoil.

US 2017/088250 A1 describes aircraft wing assemblies. An example includes a trailing edge of a wing of an aircraft. The trailing edge has an elastically deformable skin defining a first surface. The trailing edge has a first end to be fixed to the wing and a second end opposite the first end that is to move relative to the first end. A flap is movably coupled to the second end of the trailing edge. The flap is movable between a stowed position and a deployed position. The trailing edge is to elastically elongate when the flap moves from the stowed position to the deployed position and the trailing edge is to elastically collapse when the flap moves from the deployed position to the stowed position.

US 7 815 147 B2 describes the covers used for covering recesses, hollows and/or cutouts which affect the aerodynamic properties of outer surfaces of vehicles such as aircraft and high-speed trains.

US 2 666 603 A describes control surfaces and more particularly improvements in means for balancing such surfaces in aircraft and like vehicles.

### Summary of the invention

It may be seen as an object of the invention to improve the air flow behavior at a trailing edge system.

A system and a method according to the features of the independent claims are provided. Further embodiments of the invention are evident from the dependent claims and from the following description.

According to the invention, a trailing edge system, e.g., a flap system, for an aircraft is provided. The trailing edge system comprises a wing structure having an upper skin section with an aerodynamic upper surface. The trailing edge system further comprises a trailing edge movable, e.g., a flap component, which is movably coupled to the wing structure and which is movable relative to the wing structure between a retracted position and an extended position. The trailing edge system further comprises a flexible panel element which is arranged to at least partially seal a gap between the upper surface of the wing structure and an upper surface of the trailing edge movable. The flexible panel element may selectively seal the gap between the upper surface of the wing structure and the upper surface of the trailing edge movable, dependent on the current position or configuration of the trailing edge movable. The trailing edge system further comprises a first spacer element, e.g., a displacement element, which is disposed on the upper surface of the trailing edge movable and which extends at least over a first portion of the upper surface of the trailing edge movable. The first spacer element is configured or shaped to maintain a spacing, e.g., a distance or clearance, between a first end of the flexible panel element and the upper surface of the trailing edge movable when the trailing edge movable is in the extended position. The trailing edge system further comprises an actuator mechanism, which movably couples the trailing edge movable to the wing structure via the first spacer element.

The inventive trailing edge system may be seen as an approach or concept to provide an improved sealing element in the form of the flexible panel element in order to more efficiently seal the gap between the upper surface of the wing structure and the upper surface of the flap component, while optimizing an air flow through the gap when the flap component is in the extended position. In particular, the inventive trailing edge system provides a means to specifically adapt the gap size or to close the gap depending on the current flight condition.

For example, a flexibility or pre-tension of the flexible panel element allows the first flexible panel element to adapt to different configurations, e.g., different positions and/or orientations, of the flap component with respect to the wing structure, while reliably sealing or covering the gap between the upper surface of the wing structure and the upper surface of the flap component, at least during a first partial movement of the flap component. The first spacer element, due to its geometrical shape, defines a specific movement of the flexible panel element such that a spacing can be set between the first end, e.g., a free end, of the flexible panel element and the upper surface of the trailing edge movable, at least when the flap component is in the extended position of the flap component. This spacing may provide a predetermined gap size in the extended position of the flap component.

The improved sealing, e.g., covering, of the gap during retracted flap component positions and the setting of a predetermined gap size in the extended position may positively influence an air flow in the trailing edge region of an aircraft wing, in particular, in the transition region between the aerodynamic upper surface of the wing skin and the aerodynamic upper surface of the flap skin, depending on the flight condition.

The trailing edge system comprises the wing structure which may be seen as the base system to which the trailing edge movable is movably coupled. The wing structure has a skin section with an aerodynamic outer surface. In particular, the wing structure has an aerodynamic upper surface and an aerodynamic lower surface. The upper and lower surfaces may be connected to each other via a leading edge at the front of the wing structure and via a trailing edge at the rear of the wing structure. The trailing edge movable may be a flap component, e.g., a flap or part of a flap, and may be arranged at the rear of the wing structure. Multiple trailing edge movables may together form a trailing edge unit. For example, multiple trailing edge movables are arranged next to each other along a spanwise extension direction of the wing structure. However, multiple trailing edge movables may also be arranged next to each other along a chordwise extension direction of the wing structure, wherein the trailing edge movables provide a series of trailing edge movables coupled to each other.

The trailing edge movable is configured to move relative to the wing structure between the retracted position and the extended position, wherein the gap between the wing structure and the trailing edge movable changes the size during the movement. In particular, the gap may be sealed, e.g., covered or closed, by the flexible panel element when the trailing edge movable is in a retracted position or when the trailing edge movable is moved from the retracted position to an intermediate or clean position, the intermediate or clean position defines a position of the trailing edge movable between the fully retracted position and the extended position. Furthermore, a predetermined gap size may be set by the first spacer element when the trailing edge movable is moved to the extended position. It is possible that the gap size may constantly increase shortly before the trailing edge movable reaches the extended position. The retracted position may herein also be referred to as retracted configuration and the extended position may herein also be referred to as extended configuration.

The flexible panel element may be arranged at the upper skin section, in particular at the upper surface, of the wing structure and may extend in a downstream direction of the wing structure to span or cover at least a part of the gap between the wing structure and the trailing edge movable. The flexible panel element may be attached to the upper skin section of the wing structure or may be integrally formed with the upper skin section of the wing structure.

The flexible panel element may comprise a predetermined flexibility and/or pre-tension after manufacturing the same. It may comprise a fiber-reinforced material, for example a fiber-reinforced plastic material like carbon fiber-reinforced plastics. However, it may also comprise a metallic material or combinations of fiber-reinforced materials and metallic materials. The flexible panel element may be manufactured using a molding process in which it is pre-formed or pre-shaped. The flexible panel element may have a sheet-like or plate-like shape.

The first spacer element may be present in the form of a protrusion or extension on the upper surface of the trailing edge movable. In its cross-section, the trailing edge movable may have an airfoil-like shape defined by an outer surface contour, and the first spacer element may form an additional structure that protrudes away from the upper outer surface contour of the trailing edge movable. The first spacer element may be present in the form of an extension or protrusion that covers the first portion of the upper surface of the trailing edge movable, i.e., a first surface region that extends along the upper surface of the trailing edge movable. In other words, the first spacer element may add an additional structure to the upper surface of the trailing edge movable, thereby providing a displacement element which determines the movement and/or deflection of the flexible panel element, and thus determines the size of the gap, when the flexible panel element comes into contact with the first spacer element.

Due to the flexibility and/or pre-tension of the flexible panel element, it may be configured to be bent or deflected when it comes into contact with and is pushed against the first spacer element of the trailing edge movable, during movement of the trailing edge movable with respect to the wing structure. It is possible that the flexible panel element is in contact with the upper surface of the trailing edge movable when the trailing edge movable is in the most retracted position or in the intermediate position. When the trailing edge movable is moved further towards the extended position, then there will be a point in time when the first end of the flexible panel element contacts the first spacer element on the upper surface of the trailing edge movable. Upon further movement of the trailing edge movable to the extended position and due to the shape of the first spacer element, the flexible panel element will be deflected away from the upper surface of the trailing edge movable, thereby providing the spacing between the first end of the flexible panel element and the upper surface of the trailing edge movable.

According to an embodiment, the extended position represents a high lift-configuration of the trailing edge movable.

This means that, during high-lift configurations, the spacing between the first end of the flexible panel element and the upper surface of the trailing edge movable may provide a predetermined gap where an air flow from between the trailing edge movable and the wing structure can pass through. This may positively influence the overall air flow at the trailing edge system, for example reduce drag and/or improve the high-lift performance. For example, the high-lift configuration may be a landing configuration of the trailing edge movable. In another example, the high-lift configuration may be a starting or take-off configuration of the trailing edge movable.

According to an embodiment, the first spacer element is configured to maintain the spacing between the first end of the flexible panel element and the upper surface of the trailing edge movable, thereby preventing a contact between the first end of the flexible panel element and the upper surface of the trailing edge movable when the trailing edge movable is in the extended position.

This allows to maintain the gap between the first end of the flexible panel element and the upper surface of the trailing edge movable where the air flow can pass through in order to improve the aerodynamic characteristics at the trailing edge system. As indicated above the first end of the flexible panel element is a deflectable free end of the flexible panel element, wherein the flexible panel element may be attached to the upper skin section of the wing structure via a second end of the flexible panel element.

According to an embodiment, the first spacer element is shaped such that the spacing between a first end of the flexible panel element and the upper surface of the trailing edge movable is varied upon retraction of the trailing edge movable from the extended position.

Thus, when retracting the trailing edge movable, starting from the extended position, then the geometrical shape or contour of the first spacer element defines the subsequent spacing between the first end of the flexible panel element and the upper surface of the trailing edge movable, i.e., during the retraction movement of the trailing edge movable. As the first spacer element may comprise different heights along the first portion of the upper surface of the trailing edge movable, e.g., in a chordwise direction of the trailing edge movable, the spacing between the first end of the flexible panel element and the upper surface of the trailing edge movable will change during the retraction movement of the trailing edge movable. In an example, the first spacer element is shaped such that the spacing between a first end of the flexible panel element and the upper surface of the trailing edge movable is decreased when the trailing edge movable is moved from the extended position towards the retracted position.

According to an embodiment, the first end of the flexible panel element is configured to be brought into contact with a second portion of the upper surface of the trailing edge movable, the second portion of the upper surface of the trailing edge movable being different from the first portion of the upper surface of the trailing edge movable.

It is possible that the first portion of the upper surface where the first spacer element is attached is located between a nose of the trailing edge movable and a point on the upper surface of the trailing edge movable where the trailing edge movable has the highest thickness, i.e., where the airfoil of the trailing edge movable has the maximum thickness. In other words, the first spacer element and thus the first portion of the upper surface is located on the upper surface in a front part of the trailing edge movable. In contrast, the second portion of the upper surface may define a free surface region between a rear end of the first spacer element and a rear end of the trailing edge movable. In other words, the second portion is located on the upper surface in a rear part of the trailing edge movable. Consequently, only the upper surface of the front part of trailing edge movable may be covered by the first spacer element.

According to the invention, the trailing edge system further comprises an actuator mechanism which movably couples the trailing edge movable to the wing structure via the first spacer element.

The actuator mechanism may comprise a linkage in the form of struts or rods being rotatably coupled to the first spacer element and a drive element at the wing structure. It is possible that further coupling or actuator mechanisms may be provided to movably couple the trailing edge movable to the wing structure.

According to an embodiment, the spacer element has a sheet-like or plate-like structure that extends over the first portion of the upper surface of the trailing edge movable in a chordwise direction of the trailing edge movable.

The sheet-like or plate-like structure may be connected to the first portion of the upper surface of the trailing edge movable and may also protrude away from the upper surface of the trailing edge movable. The sheet-like or plate-like structure may have lateral dimensions, i.e., a width and a length, being substantially greater than a thickness of the sheet-like or plate-like structure. The sheet-like or plate-like structure may thus be considered as a fence on the upper surface of the trailing edge movable. A lateral dimension of the sheet-like or plate-like structure may extend in a chordwise direction of the trailing edge movable to reduce drag, since the thickness of the sheet-like or plate-like structure is very small and thus the surface portion of the first spacer element that is subjected to an oncoming airflow is very small.

According to an embodiment, the trailing edge system further comprises a second spacer element which is arranged on the trailing edge movable, wherein the second spacer element is spaced apart from the first spacer element in a spanwise direction of the trailing edge movable.

It is possible that the features and characteristics of the first spacer element equally apply for the second spacer element. **In** an example, a plurality of spacer elements may be arranged on the upper surface of the trailing edge movable, wherein all of these spacer elements are spaced apart from each other in the spanwise direction of the trailing edge movable.

According to an aspect, an aircraft wing comprising the trailing edge system as described herein is provided, wherein the trailing edge system is arranged at a trailing edge region of the aircraft wing.

In an example, an aircraft comprising the trailing edge system as described herein is provided.

According to the invention, a method for operating a trailing edge movable of a trailing edge system is provided. The trailing edge system comprises a wing structure to which the trailing edge movable is movably coupled, wherein the wing structure has a flexible panel element which is arranged to at least partially seal a gap between an upper surface of the wing structure and an upper surface of the trailing edge movable, and wherein the trailing edge movable has a first spacer element which is disposed on the upper surface of the trailing edge movable and which extends at least over a first portion of the upper surface of the trailing edge movable, wherein an actuator mechanism movably couples the trailing edge movable to the wing structure via the first spacer element. In a step of the method, the trailing edge movable is maintained in an extended position, wherein the first spacer element provides a spacing between a first end of the flexible panel element and the upper surface of the trailing edge movable. In another step, the trailing edge movable is retracted from the extended position towards a retracted position, thereby decreasing the spacing between a first end of the flexible panel element and the upper surface of the trailing edge movable. In another step, the trailing edge movable is further retracted towards the retracted position, thereby providing a contact between the first end of the flexible panel element and the upper surface of the trailing edge movable. The method steps may be performed in the indicated order.

### Brief description of the drawings

The present invention will hereinafter be described in conjunction with the following drawing figures, wherein like numerals denote like elements, and wherein:
- Fig. 1: shows a cross-sectional view of a trailing edge system including a flexible panel element for sealing a gap between an upper surface of a wing structure and an upper surface of a trailing edge movable.
- Fig. 2: shows a cross-sectional view of the trailing edge system of Fig. 1, with the trailing edge movable further including a first spacer element.
- Fig. 3: shows a cross-sectional view of the trailing edge system of Fig. 2, including an actuator mechanism for movably coupling the trailing edge movable to the wing structure.
- Fig. 4: shows an aircraft comprising a trailing edge system.
- Fig. 5: shows a flow diagram of a method for operating a trailing edge system.

### Detailed description of exemplary embodiments

The representations and illustrations in the drawings are schematic and not to scale. A better understanding of the method and system described above may be obtained through a review of the illustrations accompanying this application together with a review of the detailed description that follows.

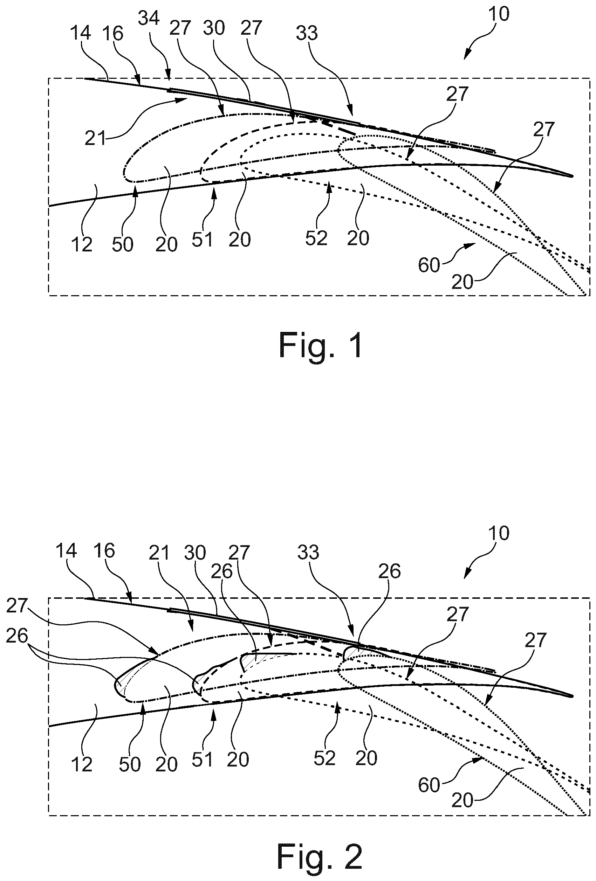

Fig. 1 shows a trailing edge system 10 comprising a trailing edge movable 20 which is movably coupled to a wing structure 12. The wing structure 12 includes an upper skin section 14 with an aerodynamic upper surface 16. A flexible panel element 30 is attached to the upper skin section 14 of the wing structure 12 or is integrally formed therewith via a second end 34. The flexible panel element 30 is adapted for sealing a gap 21 between the upper surface 16 of the wing structure 12 and an upper surface 27 of the trailing edge movable 20.

An outer contour of the trailing edge system 10 is indicated in Fig. 1 for four different configurations of the trailing edge movable 20, i.e., a retracted configuration 50 (left depiction of the trailing edge movable 20), an intermediate or clean configuration 51 (second left depiction of the trailing edge movable 20), a first high-lift or starting configuration 52 (second right depiction of the trailing edge movable 20), and a second high-lift or landing configuration 60 (right depiction of the trailing edge movable 20). The second high-lift or landing configuration 60 may herein also be referred to as extended position 60. The trailing edge movable 20 is movably coupled to the wing structure 12 and is thus movable relative to the wing structure 12. For simplicity, Fig. 1 does not show the coupling mechanism which movably couples the trailing edge movable 20 to the wing structure 12.

The trailing edge system 10 further comprises the flexible panel element 30 which is arranged to seal or cover the upper gap 21 between the upper surface 16 of the wing structure 12 and the upper surface 27 trailing edge movable 20. The flexible panel element 30 may interact with the trailing edge movable 20 by establishing a contact between a first end 33 of the flexible panel element 30 and the upper surface 27 of the trailing edge movable 20, but this may only be the case for the retracted configuration 50, the intermediate or clean configuration 51, as well as for the first high-lift or starting configuration 52. In the extended position 60, i.e., in the second high-lift or landing configuration 60, there may be no contact between the first end 33 of the flexible panel element 30 and the upper surface 27 of the trailing edge movable 20 since in this case the first end 33 of the flexible panel element 30 and the upper surface 27 of the trailing edge movable 20 may be spaced apart by a first spacer element, as will be described in more detail with respect to Fig. 2.

When the trailing edge movable 20 is in the retracted position 50, the flexible panel element 30 is deflected away from a neutral position due to the contact between the first end 33 of the flexible panel element 30 and the upper surface 27 of the trailing edge movable 20. In Fig. 1, the solid line for the flexible panel element 30 indicates a loaded state of the flexible panel element 30 where the first end 33 of the flexible panel element 30 is pressed against the upper surface 27 of the trailing edge movable 20 due to a pre-tension of the flexible panel element 30. In other words, when the trailing edge movable 20 is in the retracted position 50, the first end 33 of the flexible panel element 30 is biased against the upper surface 27 of the trailing edge movable 20, and thus closes the upper gap 21 between the upper surface 16 of the wing structure 12 and the upper surface 27 of the trailing edge movable 20. This provides an improved air flow along the upper surface of the entire trailing edge system 10. In particular, the air flow may be positively influenced and/or drag may be reduced by closing the upper gap 21, at least when the trailing edge movable 20 is in the retracted position 60. The same behavior of the flexible panel element 30 may apply when the trailing edge movable 20 is in the intermediate or clean configuration 51. However, when the trailing edge movable 20 is either in the starting configuration 52 or in the landing configuration 60, then the first end 33 of the flexible panel element 30 may lose its contact to the upper surface 27 of the trailing edge movable 20 and the flexible panel element 30 would consequently be in an unloaded state. In Fig. 1, the dashed line for the flexible panel element 30 indicates the unloaded state of the flexible panel element 30 where the first end 33 of the flexible panel element 30 is not in contact with the upper surface 27 of the trailing edge movable 20 anymore.

Fig. 2 shows the trailing edge system 10 of Fig. 1, wherein the trailing edge movable 20 further includes the first spacer element 26. The first spacer element 26 is disposed on and attached to the upper surface 27 of the trailing edge movable 20. The first spacer element 26 extends over a first portion of the upper surface 27 of the trailing edge movable 20, and this is indicated in Fig. 2 for each of the four above-mentioned different configurations of the trailing edge movable 20. In particular, as can be derived from Fig. 2, the first portion of the upper surface 27 is located between a nose of the trailing edge movable 20 and a point on the upper surface 27 of the trailing edge movable 20 where the trailing edge movable 20 has the highest thickness, i.e., where the airfoil that defines the cross-section of the trailing edge movable 20 has the maximum thickness. That is, the first spacer element 26 and thus the first portion of the upper surface 27 is located on the upper surface 27 in a front part of the trailing edge movable 20. In contrast, a second portion of the upper surface 27 may define a free surface region between a rear end of the first spacer element 26 and the rear end of the trailing edge movable 20. In other words, the second portion is located on the upper surface 27 in a rear part of the trailing edge movable 20. Consequently, only the upper surface 27 of the front part of trailing edge movable 20 may be covered by the first spacer element 26.

The first spacer element 26 is configured and/or shaped such that a spacing, e.g., a distance or clearance, between the first end 33 of the flexible panel element 30 and the upper surface 27 of the trailing edge movable 20 is maintained or ensured when the trailing edge movable 20 is in the extended position 60. This can be seen in Fig. 2 for the trailing edge movable 20 being in the extended position 60 where the first end 33 of the flexible panel element 30 contacts, e.g., abuts, the first spacer element 26 (cf. also solid line for the flexible panel element 30 which represents a loaded state of the flexible panel element 30 in the extended position 60). As the first spacer element 26 has a sheet-like or plate-like structure extending longitudinally in a chordwise direction of the trailing edge movable 20, an air flow can pass on each side of the first spacer element 26, and thorough the gap between the upper surface 27 of the trailing edge movable 20 and the first end 33 of the flexible panel element 30, which gap is provided by maintaining the above-mentioned spacing. For the extended position 60, i.e., for the high-lift or landing configuration 60 this air flow through the gap may positively influence the aerodynamic characteristics and performance of the entire trailing edge system 10.

Due to the flexibility and/or pre-tension of the flexible panel element 30, it may be configured to be bent or deflected when it comes into contact with and is pushed against the first spacer element 26 of the trailing edge movable 20, during movement of the trailing edge movable 20 with respect to the wing structure 12. As explained above, the flexible panel element 30 is in contact with the upper surface 27 of the trailing edge movable 20 when the trailing edge movable 20 is in the most retracted position 50 and/or in the intermediate or clean position 51 and/or in the first high-lift or starting configuration 52. When the trailing edge movable 20 is moved further towards the extended position 60, then there will be a point in time when the first end 33 of the flexible panel element 30 contacts the rear end of the first spacer element 26. Upon further movement of the trailing edge movable 20 to the extended position 60 and due to the protruding shape of the first spacer element 26 (cf. Fig. 2 showing an exemplary geometrical shape of the first spacer element 26), the flexible panel element 30 is deflected away from the upper surface 27 of the trailing edge movable 20, thereby providing the spacing between the first end 33 of the flexible panel element 30 and the upper surface 27 of the trailing edge movable 20.

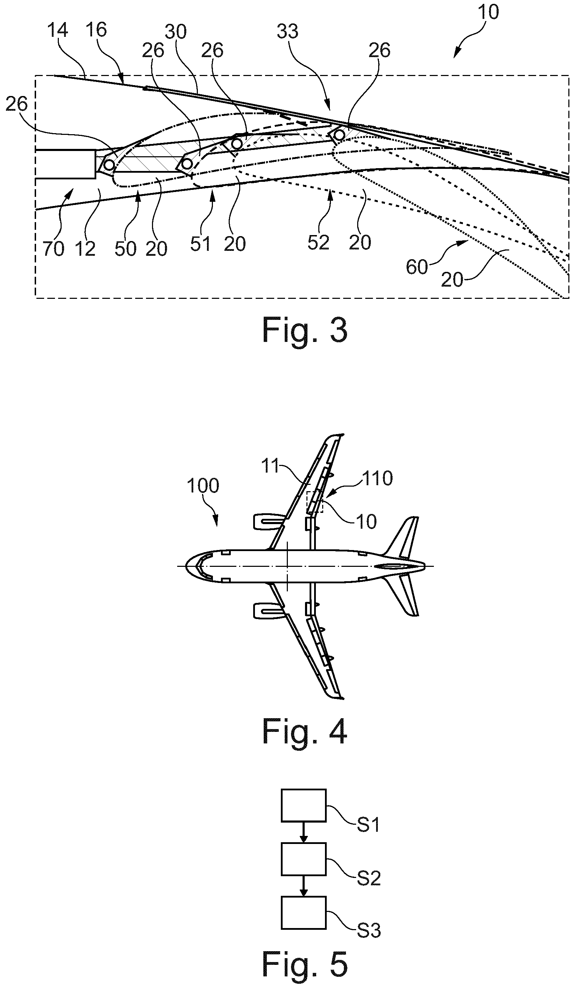

Fig. 3 shows the trailing edge system 10 of Fig. 2, including an additional actuator mechanism 70 which movably couples the trailing edge movable 20 to the wing structure 12. The actuator mechanism 70 may comprise a linkage in the form of struts and/or rods as shown in Fig. 3. The linkage may rotatably couple the first spacer element 26 and thus the trailing edge movable 20 to a drive element (not shown) located at the wing structure 12.

Fig. 4 shows an aircraft 100 comprising the trailing edge system 10 as explained above with respect to Figs. 1 to 3. The aircraft 100 comprises an aircraft wing 11, wherein the trailing edge system 10 is arranged at a trailing edge region 110 of the aircraft wing 11. In particular, the trailing edge system 10 may be part of or coupled to the aircraft wing 11.

Fig. 5 shows a flow diagram of a method for operating a trailing edge system, in particular the trailing edge movable 20 of the trailing edge system 10 as described with respect to Figs. 1 to 3. The trailing edge system 10 comprises a wing structure 12 to which the trailing edge movable 20 is movably coupled, wherein the wing structure 12 has a flexible panel element 30 which is arranged to at least partially seal a gap 21 between an upper surface 16 of the wing structure 12 and an upper surface 27 of the trailing edge movable 20, wherein the trailing edge movable 20 has a first spacer element 26 which is disposed on the upper surface 27 of the trailing edge movable 20 and which extends at least over a first portion of the upper surface 27 of the trailing edge movable 20. In a step S1 of the method, the trailing edge movable 20 is maintained, e.g., operated, in an extended position 60, wherein the first spacer element 26 provides a spacing between a first end 33 of the flexible panel element 30 and the upper surface 27 of the trailing edge movable 20. In another step S2 of the method, the trailing edge movable 20 is retracted, e.g., moved, from the extended position 60 towards a retracted position 50, thereby decreasing the spacing between a first end 33 of the flexible panel element 30 and the upper surface 27 of the trailing edge movable 20. In another step S3 of the method, the trailing edge movable 20 is further retracted, e.g., further moved, towards the retracted position 50, thereby allowing a contact between the first end 33 of the flexible panel element 30 and the upper surface 27 of the trailing edge movable 20.

## Claims

1. A trailing edge system (10) for an aircraft (100), comprising:
a wing structure (12) having an upper skin section (14) with an aerodynamic upper surface (16);
a trailing edge movable (20) which is movably coupled to the wing structure (12) and which is movable relative to the wing structure (12) between a retracted position (50) and an extended position (60);
a flexible panel element (30) which is arranged to at least partially seal a gap (21) between the upper surface (16) of the wing structure (12) and an upper surface (27) of the trailing edge movable (20);
a first spacer element (26) which is disposed on the upper surface (27) of the trailing edge movable (20) and which extends at least over a first portion of the upper surface (27) of the trailing edge movable (20);
an actuator mechanism (70) which movably couples the trailing edge movable (20) to the wing structure (12),
wherein the first spacer element (26) is configured to maintain a spacing between a first end (33) of the flexible panel element (30) and the upper surface (27) of the trailing edge movable (20) when the trailing edge movable (20) is in the extended position (60), the trailing edge system (10) being **characterised in that** the actuator mechanism (70) movably couples the trailing edge movable (20) to the wing structure (12) via the first spacer element (26).

2. The trailing edge system (10) according to claim 1,
wherein the extended position (60) represents a high lift-configuration of the trailing edge movable (20).

3. The trailing edge system (10) according to any one of the preceding claims,
wherein the first spacer element (26) is configured to maintain the spacing between the first end (33) of the flexible panel element (30) and the upper surface (27) of the trailing edge movable (20), thereby preventing a contact between the first end (33) of the flexible panel element (30) and the upper surface (27) of the trailing edge movable (20) when the trailing edge movable (20) is in the extended position (60).

4. The trailing edge system (10) according to any one of the preceding claims,
wherein the first spacer element (26) is shaped such that the spacing between a first end (33) of the flexible panel element (30) and the upper surface (27) of the trailing edge movable (20) is varied upon retraction of the trailing edge movable (20) from the extended position (60).

5. The trailing edge system (10) according to any one of the preceding claims,
wherein the first end (33) of the flexible panel element (30) is in contact with a second portion of the upper surface (27) of the trailing edge movable (20), the second portion of the upper surface (27) of the trailing edge movable (20) being different from the first portion of the upper surface (27) of the trailing edge movable (20).

6. The trailing edge system (10) according to any one of the preceding claims,
wherein the first spacer element (26) has a sheet-like or plate-like structure that extends over the first portion of the upper surface (27) of the trailing edge movable (20) in a chordwise direction of the trailing edge movable (20).

7. The trailing edge system (10) according to any one of the preceding claims, comprising:
a second spacer element (26) which is arranged on the trailing edge movable (20);
wherein the second spacer element (26) is spaced apart from the first spacer element (26) in a spanwise direction of the trailing edge movable (20).

8. An aircraft wing (11) comprising the trailing edge system (10) according to any one of the preceding claims;
wherein the trailing edge system (10) is arranged at a trailing edge region (110) of the aircraft wing (11).

9. Method for operating a trailing edge movable (20) of a trailing edge system (10), the trailing edge system (10) comprising a wing structure (12) to which the trailing edge movable (20) is movably coupled, wherein the wing structure (12) has a flexible panel element (30) which is arranged to at least partially seal a gap (21) between an upper surface (16) of the wing structure (12) and an upper surface (27) of the trailing edge movable (20), wherein the trailing edge movable (20) has a first spacer element (26) which is disposed on the upper surface (27) of the trailing edge movable (20) and which extends at least over a first portion of the upper surface (27) of the trailing edge movable (20), wherein an actuator mechanism (70) movably couples the trailing edge movable (20) to the wing structure (12) via the first spacer element (26);
wherein the method comprises the steps of:
maintaining the trailing edge movable (20) in an extended position (60), wherein the first spacer element (26) provides a spacing between a first end (33) of the flexible panel element (30) and the upper surface (27) of the trailing edge movable (20, S1);
retracting the trailing edge movable (20) from the extended position (60) towards a retracted position (50), thereby decreasing the spacing between a first end (33) of the flexible panel element (30) and the upper surface (27) of the trailing edge movable (20, S2);
further retracting the trailing edge movable (20) towards the retracted position (50), thereby providing a contact between the first end (33) of the flexible panel element (30) and the upper surface (27) of the trailing edge movable (20, S3).

## Patentansprüche

1. Hinterkantensystem (10) für ein Luftfahrzeug (100), aufweisend:
eine Flügelstruktur (12) mit einem oberen Beplankungsabschnitt (14) mit einer aerodynamischen Oberseite (16);
einen Hinterkanten-Bewegungskörper (20), der bewegbar mit der Flügelstruktur (12) gekoppelt ist und der relativ zu der Flügelstruktur (12) zwischen einer eingefahrenen Stellung (50) und einer ausgefahrenen Stellung (60) bewegbar ist;
ein flexibles Plattenelement (30), das angeordnet ist, um einen Spalt (21) zwischen der Oberseite (16) der Flügelstruktur (12) und einer Oberseite (27) des Hinterkanten-Bewegungskörpers (20) zumindest teilweise abzudichten;
ein erstes Abstandshalterelement (26), das an der Oberseite (27) des Hinterkanten-Bewegungskörpers (20) angeordnet ist und das sich zumindest über einen ersten Abschnitt der Oberseite (27) des Hinterkanten-Bewegungskörpers (20) erstreckt;
einen Aktuatorenmechanismus (70), der den Hinterkanten-Bewegungskörper (20) bewegbar mit der Flügelstruktur (12) koppelt,
wobei das erste Abstandshalterelement (26) dazu eingerichtet ist, einen Abstand zwischen einem ersten Ende (33) des flexiblen Plattenelements (30) und der Oberseite (27) des Hinterkanten-Bewegungskörpers (20) aufrechtzuerhalten, wenn sich der Hinterkanten-Bewegungskörper (20) in der ausgefahrenen Stellung (60) befindet, wobei das Hinterkantensystem (10) **dadurch gekennzeichnet ist, dass** der Aktuatorenmechanismus (70) den Hinterkanten-Bewegungskörper (20) über das erste Abstandshalterelement (26) bewegbar mit der Flügelstruktur (12) koppelt.

2. Hinterkantensystem (10) nach Anspruch 1,
wobei die ausgefahrene Stellung (60) eine Hochauftriebskonfiguration des Hinterkanten-Bewegungskörpers (20) darstellt.

3. Hinterkantensystem (10) nach einem der vorhergehenden Ansprüche,
wobei das erste Abstandshalterelement (26) dazu eingerichtet ist, den Abstand zwischen dem ersten Ende (33) des flexiblen Plattenelements (30) und der Oberseite (27) des Hinterkanten-Bewegungskörpers (20) aufrechtzuerhalten, wodurch ein Kontakt zwischen dem ersten Ende (33) des flexiblen Plattenelements (30) und der Oberseite (27) des Hinterkanten-Bewegungskörpers (20) verhindert wird, wenn sich der Hinterkanten-Bewegungskörper (20) in der ausgefahrenen Stellung (60) befindet.

4. Hinterkantensystem (10) nach einem der vorhergehenden Ansprüche,
wobei das erste Abstandshalterelement (26) derart geformt ist, dass der Abstand zwischen einem ersten Ende (33) des flexiblen Plattenelements (30) und der Oberseite (27) des Hinterkanten-Bewegungskörpers (20) beim Einfahren des Hinterkanten-Bewegungskörpers (20) aus der ausgefahrenen Stellung (60) verändert wird.

5. Hinterkantensystem (10) nach einem der vorhergehenden Ansprüche,
wobei das erste Ende (33) des flexiblen Plattenelements (30) in Kontakt steht mit einem zweiten Abschnitt der Oberseite (27) des Hinterkanten-Bewegungskörpers (20), wobei sich der zweite Abschnitt der Oberseite (27) des Hinterkanten-Bewegungskörpers (20) von dem ersten Abschnitt der Oberseite (27) des Hinterkanten-Bewegungskörpers (20) unterscheidet.

6. Hinterkantensystem (10) nach einem der vorhergehenden Ansprüche,
wobei das erste Abstandshalterelement (26) eine folienartige oder plattenartige Struktur aufweist, die sich über den ersten Abschnitt der Oberseite (27) des Hinterkanten-Bewegungskörpers (20) in einer Profilschnenrichtung des Hinterkanten-Bewegungskörpers (20) erstreckt.

7. Hinterkantensystem (10) nach einem der vorhergehenden Ansprüche,
aufweisend:
ein zweites Abstandshalterelement (26), das an dem Hinterkanten-Bewegungskörper (20) angeordnet ist;
wobei das zweite Abstandshalterelement (26) in einer Spannweitenrichtung des Hinterkanten-Bewegungskörpers (20) von dem ersten Abstandshalterelement (26) beabstandet ist.

8. Luftfahrzeugflügel (11), aufweisend das Hinterkantensystem (10) nach einem der vorhergehenden Ansprüche;
wobei das Hinterkantensystem (10) an einem Hinterkantenbereich (110) des Luftfahrzeugflügels (11) angeordnet ist.

9. Verfahren zum Betreiben eines Hinterkanten-Bewegungskörpers (20) eines Hinterkantensystems (10), wobei das Hinterkantensystem (10) eine Flügelstruktur (12) aufweist, mit welcher der Hinterkanten-Bewegungskörper (20) bewegbar gekoppelt ist, wobei die Flügelstruktur (12) ein flexibles Plattenelement (30) aufweist, das angeordnet ist, um einen Spalt (21) zwischen einer Oberseite (16) der Flügelstruktur (12) und einer Oberseite (27) des Hinterkanten-Bewegungskörpers (20) zumindest teilweise abzudichten, wobei der Hinterkanten-Bewegungskörper (20) ein erstes Abstandshalterelement (26) aufweist, das an der Oberseite (27) des Hinterkanten-Bewegungskörpers (20) angeordnet ist und das sich zumindest über einen ersten Abschnitt der Oberseite (27) des Hinterkanten-Bewegungskörpers (20) erstreckt, wobei ein Aktuatorenmechanismus (70) den Hinterkanten-Bewegungskörper (20) über das erste Abstandshalterelement (26) bewegbar mit der Flügelstruktur (12) koppelt; wobei das Verfahren die Schritte aufweist:
Halten des Hinterkanten-Bewegungskörpers (20) in einer ausgefahrenen Stellung (60), wobei das erste Abstandshalterelement (26) einen Abstand zwischen einem ersten Ende (33) des flexiblen Plattenelements (30) und der Oberseite (27) des Hinterkanten-Bewegungskörpers (20, S1) bereitstellt;
Einfahren des Hinterkanten-Bewegungskörpers (20) aus der ausgefahrenen Stellung (60) in Richtung einer eingefahrenen Stellung (50), wodurch der Abstand zwischen einem ersten Ende (33) des flexiblen Plattenelements (30) und der Oberseite (27) des Hinterkanten-Bewegungskörpers (20, S2) verringert wird;
weiteres Einfahren des Hinterkanten-Bewegungskörpers (20) in Richtung der eingefahrenen Stellung (50), wodurch ein Kontakt zwischen dem ersten Ende (33) des flexiblen Plattenelements (30) und der Oberseite (27) des Hinterkanten-Bewegungskörpers (20, S3) bereitgestellt wird.

## Revendications

1. Système de bord d'attaque arrière (10) pour un aéronef (100), comprenant :
une structure de voilure (12) présentant une section de revêtement supérieur (14) dotée d'une surface supérieure aérodynamique (16);
un élément mobile de bord d'attaque arrière (20) qui est couplé de manière mobile à la structure de voilure (12) et qui est mobile par rapport à la structure de voilure (12) entre une position rétractée (50) et une position sortie (60);
un élément de panneau flexible (30) qui est agencé pour sceller au moins partiellement un espace (21) entre la surface supérieure (16) de la structure de voilure (12) et une surface supérieure (27) de l'élément mobile de bord d'attaque arrière (20);
un premier élément d'espacement (26) qui est disposé sur la surface supérieure (27) de l'élément mobile de bord d'attaque arrière (20) et qui s'étend au moins sur une première partie de la surface supérieure (27) de l'élément mobile de bord d'attaque arrière (20);
un mécanisme d'actionnement (70) qui couple de manière mobile l'élément mobile de bord d'attaque arrière (20) à la structure de voilure (12),
dans lequel le premier élément d'espacement (26) est configuré pour maintenir un espacement entre une première extrémité (33) de l'élément de panneau flexible (30) et la surface supérieure (27) de l'élément mobile de bord d'attaque arrière (20) lorsque l'élément mobile de bord d'attaque arrière (20) se trouve dans la position sortie (60), le système de bord d'attaque arrière (10) étant **caractérisé en ce que** le mécanisme d'actionnement (70) couple de manière mobile l'élément mobile de bord d'attaque arrière (20) à la structure de voilure (12) par l'intermédiaire du premier élément d'espacement (26).

2. The trailing edge system (10) according to claim 1,
wherein the extended position (60) represents a high lift-configuration of the trailing edge movable (20).

3. Système de bord d'attaque arrière (10) selon l'une quelconque des revendications précédentes,
dans lequel le premier élément d'espacement (26) est configuré pour maintenir l'espacement entre la première extrémité (33) de l'élément de panneau flexible (30) et la surface supérieure (27) de l'élément mobile de bord d'attaque arrière (20), empêchant ainsi un contact entre la première extrémité (33) de l'élément de panneau flexible (30) et la surface supérieure (27) de l'élément mobile de bord d'attaque arrière (20) lorsque l'élément mobile de bord d'attaque arrière (20) se trouve dans la position sortie (60).

4. Système de bord d'attaque arrière (10) selon l'une quelconque des revendications précédentes,
dans lequel le premier élément d'espacement (26) est conformé de sorte que l'espacement entre une première extrémité (33) de l'élément de panneau flexible (30) et la surface supérieure (27) de l'élément mobile de bord d'attaque arrière (20) est varié lors de la rétraction de l'élément mobile de bord d'attaque arrière (20) depuis la position sortie (60).

5. Système de bord d'attaque arrière (10) selon l'une quelconque des revendications précédentes,
dans lequel la première extrémité (33) de l'élément de panneau flexible (30) est en contact avec une deuxième partie de la surface supérieure (27) de l'élément mobile de bord d'attaque arrière (20), la deuxième partie de la surface supérieure (27) de l'élément mobile de bord d'attaque arrière (20) étant différente de la première partie de la surface supérieure (27) de l'élément mobile de bord d'attaque arrière (20).

6. Système de bord d'attaque arrière (10) selon l'une quelconque des revendications précédentes,
dans lequel le premier élément d'espacement (26) présente une structure de type feuille ou de type plaque qui s'étend sur la première partie de la surface supérieure (27) de l'élément mobile de bord d'attaque arrière (20) dans une direction de la corde de l'élément mobile de bord d'attaque arrière (20).

7. Système de bord d'attaque arrière (10) selon l'une quelconque des revendications précédentes, comprenant :
un second élément d'espacement (26) qui est agencé sur l'élément mobile de bord d'attaque arrière (20);
dans lequel le second élément d'espacement (26) est espacé du premier élément d'espacement (26) dans une direction de l'envergure de l'élément mobile de bord d'attaque arrière (20).

8. Aile d'aéronef (11) comprenant le système de bord d'attaque arrière (10) selon l'une quelconque des revendications précédentes;
dans laquelle le système de bord d'attaque arrière (10) est agencé au niveau d'une zone de bord d'attaque arrière (110) de l'aile d'aéronef (11).

9. Procédé de fonctionnement d'un élément mobile de bord d'attaque arrière (20) d'un système de bord d'attaque arrière (10), le système de bord d'attaque arrière (10) comprenant une structure de voilure (12) à laquelle l'élément mobile de bord d'attaque arrière (20) est couplé de manière mobile, dans lequel la structure de voilure (12) présente un élément de panneau flexible (30) qui est agencé pour sceller au moins partiellement un espace (21) entre une surface supérieure (16) de la structure de voilure (12) et une surface supérieure (27) de l'élément mobile de bord d'attaque arrière (20), dans lequel l'élément mobile de bord d'attaque arrière (20) présente un premier élément d'espacement (26) qui est disposé sur la surface supérieure (27) de l'élément mobile de bord d'attaque arrière (20) et qui s'étend au moins sur une première partie de la surface supérieure (27) de l'élément mobile de bord d'attaque arrière (20), dans lequel un mécanisme d'actionnement (70) couple de manière mobile l'élément mobile de bord d'attaque arrière (20) à la structure de voilure (12) par l'intermédiaire du premier élément d'espacement (26);
dans lequel le procédé comprend les étapes consistant à:
maintenir l'élément mobile de bord d'attaque arrière (20) dans une position sortie (60), dans lequel le premier élément d'espacement (26) fournit un espacement entre une première extrémité (33) de l'élément de panneau flexible (30) et la surface supérieure (27) de l'élément mobile de bord d'attaque arrière (20, S1);
rétracter l'élément mobile de bord d'attaque arrière (20) depuis la position sortie (60) vers une position rétractée (50), réduisant ainsi l'espacement entre une première extrémité (33) de l'élément de panneau flexible (30) et la surface supérieure (27) de l'élément mobile de bord d'attaque arrière (20, S2);
rétracter davantage l'élément mobile de bord d'attaque arrière (20) vers la position rétractée (50), fournissant ainsi un contact entre la première extrémité (33) de l'élément de panneau flexible (30) et la surface supérieure (27) de l'élément mobile de bord d'attaque arrière (20, S3).
